# EUROPEAN PATENT SPECIFICATION

(11) **EP 1 682 325 B1**
(45) Date of publication and mention of the grant of the patent: **07.01.2009**
(21) Application number: 04793866.7
(22) Date of filing: 27.10.2004
(51) Int. Cl.: B29C 45/26

(54) **INJECTION-MOULDING OF A PLASTIC PART**
SPRITZGIESSEN EINES KUNSTSTOFFTEILS
MOULAGE PAR INJECTION D'UNE PI CE EN PLASTIQUE

(30) Priority: 31.10.2003 SE 0302886
(43) Date of publication of application: 26.07.2006
(73) Proprietor: VOLVO LASTVAGNAR AB, 405 08 Göteborg (SE)
(72) Inventor: BANG, Edvard, S-426 54 Västra Frölunda (SE)
(74) Representative: Fröhling, Werner Otto
(86) International application number: PCT/SE2004/001566
(87) International publication number: WO 2005/042228

(56) References cited:
- DATABASE WPI Week 199538, Derwent Publications Ltd., London, GB; Class A32, AN 1995-288950, XP002983292 & JP 7 186 193 A (SEKISUI CHEM IND CO LTD) 25 July 1995
- DATABASE WPI Week 198748, Derwent Publications Ltd., London, GB; Class A32, AN 1987-337184, XP002983293 & JP 62 240 521 A (MATSUSHITA ELEC IND CO LTD) 21 October 1987
- DATABASE WPI Week 199543, Derwent Publications Ltd., London, GB; Class A32, AN 1995-331936, XP002983294 & JP 7 227 888 A (HONDA MOTOR CO LTD) 29 August 1995
- DATABASE WPI Week 199517, Derwent Publications Ltd., London, GB; Class A35, AN 1995-127795, XP002983295 & JP 7 052 199 A (OKI ELECTRIC IND CO LTD) 28 February 1995
- DATABASE WPI Week 199641, Derwent Publications Ltd., London, GB; Class A32, AN 1996-407299, XP002983296 & JP 8 197 649 A (KOYO SEIKO CO LTD) 06 August 1996

## Description

### TECHNICAL FIELD

The present invention relates to a method for injection-molding plastic parts. The method is designed for manufacturing vehicle parts but can advantageously also be applied to parts within other technical areas.

### BACKGROUND ART

Injection-molding is a well-known manufacturing method for plastic parts within a great many technical areas such as household appliances of various kinds, for example TV sets, mobile telephones etc. The technique is also used within the vehicle industry as a great many parts in modem vehicles can be made of plastic.

Injection-molding is usually carried out by a stream of plastic which has been heated up to a temperature at which it is liquid being conducted into a mold, the mold giving the part its desired shape. In some applications, the plastic will spread in the mold in flows in a number of directions, and these flows will meet at various locations in the mold. In many cases, the mold consists of a frame or another similar configuration which can be compared to a groove where the liquid plastic will spread in different directions in the groove. The various flow directions will meet at one or more places in the groove, and what is known as a weld line or knit line will be formed at these meeting points.

The weld line can be seen with the naked eye, but in many applications the plastic part is painted after injection-molding, which means that smaller weld lines are concealed. In cases where the injection-molded part for some reason does not have to or cannot be painted, however, the weld line may be perceived as irritating. As an example of cases where the injection-molded plastic part does not have to be painted, mention may be made of applications where the plastic used is colored from the outset, in other words the injection-molding takes place using a plastic to which pigment has been added. For some types of pigment, for example pigments incorporating metal flakes, what are known as metallic pigments, the weld line can be very conspicuous.

The injection-molded part will also have reduced strength at the weld line.

Japanese document JP 09174607 discloses a device for eliminating or reducing the effect of weld lines in an injection-molded plastic part. The device comprises time-controlled valves (gates) which are opened and closed at predetermined times. This results in a device which requires great accuracy in the setting of the times for opening and closing, with attendant susceptibility to faults, at the same time as closing valves (reducing the flow rate of the plastic to zero) can cause problems of clogging of the lines which are used.

Methods of shifting the weld line to a desired position are disclosed in documents JP-A-7 186 193, JP-A-7 052 199 and JP-A-62 240 521.

### DISCLOSURE OF THE INVENTION

There is therefore a need for a method by means of which injection-molding of plastic parts can be carried out, by means of which weld lines can be removed or at least made less evident for a user. It should at least be possible to apply the method to parts which are manufactured in a mold in which the plastic will spread in one or more groove(s).

This need is met by a method for injection-molding plastic parts according to claim 1 and a corresponding arrangement according to claim 6.

Preferred embodiments are defined in the dependent claims. The branch lines are at their one end arranged to join the mold at first and, respectively, second connection points, from where the plastic flows out into the mold in at least a first and a second flow direction, and at least the first branch line is provided with a means for delaying the flow of the plastic out into the mold. This means is arranged between the branching point and the connection point, and, with the aid of this means, a meeting point between the various flow directions of the plastic can be located essentially freely selectably in the mold by virtue of the design of the means for delaying the flow of the plastic.

The weld line is therefore not eliminated, but the manufacturer can choose to locate the weld line at a point on the part where it will be least visible for an observer. Moreover, the weld line can be moved to a location in the part where the stresses are at a minimum, which means that the problem of the effect of the weld line on the strength can be reduced.

The means for delaying the flow of the plastic out into the mold is suitably adapted to allow the plastic to maintain a certain minimum flow rate which is greater than zero.

According to the invention, the mold is provided with a further line for injecting material at the selected meeting point, and, in conjunction with this, a means for taking up excess plastic. The advantage of this will emerge from the detailed description which follows below.

In an injection-molded part, what are known as flow lines can also arise. The invention describes an embodiment in which these can be eliminated or at least considerably reduced.

### DESCRIPTION OF FIGURES

The invention will be described in greater detail below with reference to
Fig. 1, which shows a diagrammatic sketch of injection-molding of a part not according to the invention, and
Fig. 2, which shows an embodiment of the invention, with the aid of a side view of Fig. 1.

### EMBODIMENTS

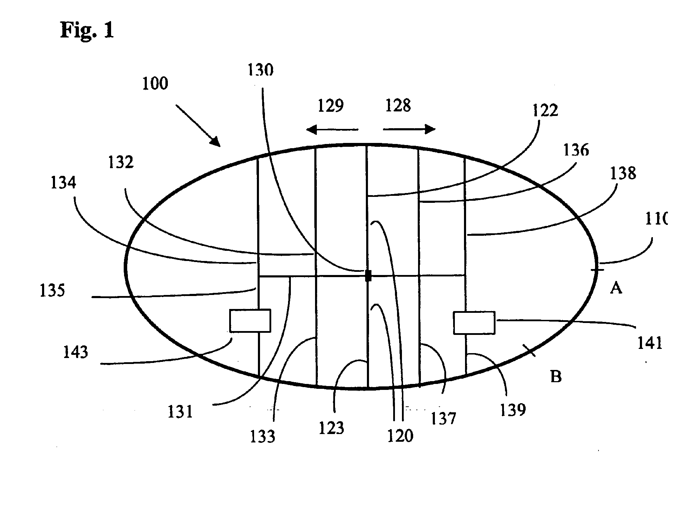

Fig. 1 shows an arrangement 100 not according to the invention. As an example of a part which can be injection-molded with the aid of the invention, this description will use a part which is to be mounted on a motor vehicle, to be precise what is known as a grille frame on a truck, in other words a frame which is arranged so as to surround the grille of the vehicle. It should be emphasized, however, that this is only an example in order to illustrate the invention; the parts which can be manufactured with the aid of the invention can in principle come from any technical area and are by no means limited to just motor vehicles or trucks. As examples of other applications of the invention, mention may be made of parts for TV sets, mobile telephones, pocket calculators and the like.

The arrangement 100 comprises a mold 110 which is designed to give the final part its desired shape, in the present case a frame. The liquid plastic is introduced into the mold 110 by means of a line 120 in which a connection point 130 for the arrangement from which the liquid plastic comes is located.

The line 120 branches in at least two directions, in each of which a branch line 122, 123 runs. These two branch lines would perhaps be sufficient, but, for the sake of completeness, the arrangement will be described with a further number of branch lines. The number of branch lines should be seen only as an example, however, and not as decisive for the invention.

Fig. 1 therefore shows an arrangement with a connection point 130 as above, from which a central line 131 extends, from which in turn a total of five pairs of branch lines, 122-123, 132-133, 134-135, 136-137 and 138-139, extend, one line of each pair joining the mold at an "upper" connection point, and the other line of the pair joining the mold at a "lower" connection point, from which points the liquid plastic can flow out into the mold. As is clear, the plastic flows will meet sooner or later, and what is known as a weld line or knit line will be formed at the meeting point(s).

As mentioned in the introduction, the weld line will be a problem in some applications, in particular those where the plastic part is not to be lacquered or otherwise painted over after injection-molding, and the problem becomes especially marked if the plastic is colored with certain types of pigment, for example a pigment incorporating metal flakes.

If the injection of plastic into the mold takes place according to previously known art, it is possible that the meeting between the two plastic flows and thus the weld line will come to lie in a location in the plastic part where it is particularly visible. It is possible to control the positioning of the weld line so that it comes to lie in a location in the part where it is less visible or where it may perhaps even be possible for it (the weld line) to be concealed by another part in the finished product in which the plastic part is to be mounted.

With reference to Fig. 1 again, the point A is an example of positioning of the weld line which may be regarded as unsuitable because it is a location in the frame which is very visible. The weld line may nevertheless come to lie at the point A if the two plastic flows are not controlled, because this point lies equidistantly from where two branch lines (138, 139) join the mold. A less visible location in the frame is the point B, for which reason it would be very suitable for it to be possible to control the weld line so that it comes to lie there.

For the purpose of making it possible to guide the weld line to in principle an arbitrary location in the finished frame, the arrangement according to the invention includes in at least one branch line 135, 139 a means 143, 141 for delaying the flow of the plastic out into the mold. It is clear that, with the aid of such a delaying means 141, 143, the weld line can be controlled so that it will come to lie at on the whole an arbitrary point in the finished part, the frame.

The means 141, 143 for delaying the flow of the plastic out into the mold 110 is suitably designed as a "hollow space" or a cavity in conjunction with the branch line, in other words a certain volume of plastic can accumulate in the hollow space before the plastic begins to flow out into the mold from the branch line. It is clear that, with suitable design of the volume of the hollow space or the cavity, the meeting, the weld line, between the two plastic flows can be guided to an arbitrary point in the frame 110 in a very accurate way.

In the example shown, the volume of the hollow space 141, 143 can correspond essentially to the volume in the mold between the points A and B.

As the delaying means suitably consists of a cavity, the flow rate of the plastic will not actually decrease; the flow rate remains essentially unchanged in terms of volume per unit of time. In other words, the flow rate is always different from zero, irrespective of the effect of the delaying means.

As a possible complement to the delaying means 141, 143, at least one branch line 136 can be provided with means for opening and closing the branch line at predetermined times. A description follows of how these are suitably used to optimize the effect of the positioning of the weld line.

Consider as an example the plastic flow at the connection point of the first branch line 122 to the "upper" part of the mold: when the flow reaches the mold, it will flow out into the mold in a first 128 and a second 129 direction, the first direction 128 being used in this example. At the same time as the plastic flows in this first direction in the mold, plastic will also flow in the "next" branch line 136 in the direction of the mold. The opening/closing means of the branch line 136 will be adjusted so that plastic from the branch line is allowed to flow out into the mold when the plastic flow from the direction 128 of the first branch line 122 is essentially directly in front of the connection of the branch line 136 to the mold 110. This means that "new" material is added to the mold where the two flows 128, 136 meet, by virtue of which no weld line arises at the meeting point, at the same time as new hot material is supplied to the mold.

The means for opening and closing the branch line are suitably designed as valves, which are controlled, for example, with the aid of a timer or the like, where the times in the timer are suitably based on suitable, measured values for the opening/closing of the valve concerned.

The connection points of each branch line are furthermore suitably connected to the mold via means for opening and closing the branch line, by virtue of which optimum control of the plastic in the mold is obtained. These means are preferably then used for opening the branch line concerned when the plastic flow is essentially directly in front of the connection of the branch line to the mold.

Apart from weld lines or knit lines, what are known as flow lines may also be formed in the plastic, which can also spoil the impression for a user and which it is therefore desirable to avoid. It has been found that a suitable way of avoiding these flow lines is to limit the pressure and rate of the plastic flows. The rate is suitably 80 mm/s, or at least within the range 70-90 mm/s, and the pressure should be kept within the range 50-70 bar.

These values apply especially if use is made of the plastic which is referred to as ASA+PC (acrylonitrile-styrene-acrylate + polycarbonate) within the industry.

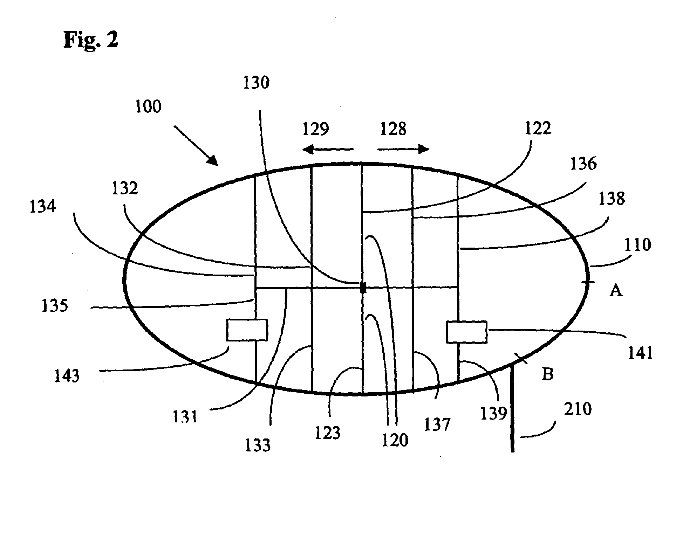

Fig. 2 shows an embodiment of the invention; as shown above, the weld line was moved to a point B where it is thought that a user will not notice it too much. By means of the embodiment in Fig. 2, the weld line can be moved further in a way which will emerge from the description below.

According to the invention, a second, separate line 210 for supplying further plastic has been arranged at the point B. With the aid of, for example, the time-controlled valves described above, the second, separate line 210 is opened at a time when the plastic flows in the mold meet at the point B. A device for taking up excess plastic is also arranged at B, suitably in the form of an extra line which extends from the mold on the rear side of the part to be produced. In other words, this device extends out of or into the plane of the paper, for which reason it is not shown in Fig. 2.

What will then happen at the point B is the following: when the two plastic flows meet at B, the second, separate line 210 is opened for inflow of "new" plastic, so there are three flows which meet. These three flows meet, and excess material from them is pressed up into the taking-up device, where a weld line arises. The special point of this is that no weld line is formed on the front side of the part, and, after the plastic has solidified, the plastic which has been pressed up into the taking-up device can be removed, for example by quite simply being broken off, which may give rise to a mark, but on the rear side of the frame. The mark will then arise instead of a weld line but, as it has been moved to the rear side of the part, it will be less noticeable, or in many cases not noticeable at-all, for a user.

The weld line can therefore be moved to the rear side of the part or replaced with a mark on the rear side of the part where the user will not notice it.

In the arrangement not according to the invention shown in Fig. 1, two delaying means appear in a number of places in the description and in Fig. 1. However, the number of delaying means can be varied; one such means might be sufficient, or more than two can be used, depending on requirements in the application concerned.

## Claims

1. A method for injection-molding plastic parts, comprising injection of a liquid plastic into a mold (110) via at least one line (120) which, at a branching point (130), is divided into at least a first (122) and a second (123) branch line, and where the branch lines are at their respective one end arranged to join the mold at first and, respectively, second connection points, from where the plastic flows out into the mold in at least a first (128) and a second (129) flow direction, at least the first branch line (135, 139) being provided with a means (143, 141) for delaying the flow of the plastic out into the mold (110), which means is arranged between the branching point (130) and the connection point and with the aid of which means a meeting point (B) between the various flow directions of the plastic can be located essentially freely selectably in the mold by virtue of the design of the means (143, 141) for delaying the flow of the plastic in the mold,
**characterized in that** the mold (110) is provided with a further line (210) for injecting material at the selected meeting point (B), and, in conjunction with this, a means for taking up excess plastic.

2. The method as claimed in claim 1, according to which the line (120) for supplying plastic to the mold is provided with more than two branch lines (122-123; 132-133; 134-135; 136-137; 138-139) with respective connection points to the mold (110).

3. The method as claimed in either of claims 1-2, according to which at least one branch line (122) is provided with means for opening and closing the branch line at predetermined times.

4. The method as claimed in any one of claims 1-3, according to which the plastic used is ASA+PC, with a flow rate in the range 70-90 mm/s.

5. The method as claimed in any one of claims 1-3, according to which the plastic used is ASA+PC, with a pressure in the range 50-70 bar.

6. An arrangement (100) for injection-molding plastic parts, comprising a line (120) for injection of a liquid plastic into a mold (110), which line, at a branching point (130), divides into at least a first (122) and a second (123) branch line, which branch lines have at their respective one ends first and, respectively, second connection points where they join the mold (110) and from where the plastic flows out into the mold in at least a first and a second flow direction (128, 129), at least the first branch line (135, 139) being provided with a means (143, 141) for delaying the flow of the plastic out into the mold (110), which means is located between the branching point and the connection point and with the aid of which means the meeting point (B) between the various flow directions of the plastic can be located essentially freely selectably in the mold by virtue of the design of the means for delaying the flow of the plastic in the mold,
**characterized in that** the mold (110) is provided with a further line (210) for injecting material at the selected meeting point (B), and, in conjunction with this, a means for taking up excess plastic.

7. The arrangement (100) as claimed in claim 6, according to which the means (143, 141) for delaying the flow of the plastic out into the mold (110) is adapted to allow the plastic to maintain a certain minimum flow rate which is greater than zero.

8. The arrangement (100) as claimed in any one of claims 6 or 7, in which the line (120) for supplying plastic to the mold is provided with more than two branch lines (122-123; 132-133; 134-135; 136-137; 138-139) with respective connection points to the mold.

9. The arrangement as claimed in any one of claims 6-8, according to which at least one branch line (122, 123) is provided with means for opening and closing the branch line at predetermined times.

10. Use of an arrangement as claimed in any one of claims 6-9 with ASA+PC plastic, with a flow rate in the range 70-90 mm/s.

11. Use of an arrangement as claimed in any one of claims 6-9 with ASA+PC plastic, with a pressure in the range 50-70 bar.

## Patentansprüche

1. Verfahren zum Spritzgießen von Kunststoffteilen, das die Einspritzung eines flüssigen Kunststoffs in eine Form (110) über wenigstens eine Leitung (120) umfasst, die sich an einer Verzweigungsstelle (130) in wenigstens eine erste (122) und eine zweite (123) Zweigleitung teilt, und bei der die Zweigleitungen an ihrem jeweiligen einen Ende so angeordnet sind, dass sie mit der Form an ersten bzw. zweiten Verbindungsstellen verbunden sind, von wo aus der Kunststoff in die Form in wenigstens einer ersten (128) und einer zweiten (129) Strömungsrichtung ausströmt, wobei wenigstens die erste Zweigleitung (135, 139) mit einer Einrichtung (143, 141) für eine Verzögerung der Ausströmung des Kunststoffs in die Form (110) versehen ist, wobei die Einrichtung zwischen der Verzweigungsstelle (130) und der Verbindungsstelle angeordnet ist und mit der Hilfe der Einrichtung ein Treffpunkt (B) zwischen verschiedenen Strömungsrichtungen des Kunststoffs im Wesentlichen frei in der Form durch die Konstruktion der Einrichtung (143, 141) zur Verzögerung der Strömung des Kunststoffs in der Form wählbar ist,
**dadurch gekennzeichnet, dass** die Form (110) mit einer weiteren Leitung (210) für eine Einspritzung von Material an dem gewählten Treffpunkt (B) und, in Verbindung hiermit, mit einer Einrichtung zur Aufnahme überschüssigen Kunststoffs versehen ist.

2. Verfahren nach Anspruch 1, bei dem die Leitung (120) für eine Zufuhr von Kunststoff in die Form mit mehr als zwei Zweigleitungen (122-123; 132-133; 134-135; 136-137; 138-139) mit jeweiligen Verbindungsstellen zu der Form (110) versehen ist.

3. Verfahren nach Anspruch 1 oder 2, bei dem wenigstens eine Zweigleitung (122) mit einer Einrichtung zum Öffnen und Schließen der Zweigleitung zu vorherbestimmten Zeiten versehen ist.

4. Verfahren nach einem der Ansprüche 1 bis 3, bei dem der verwendete Kunststoff ASA+PC mit einem Strömungsdurchsatz in dem Bereich von 70-90 mm/s ist.

5. Verfahren nach einem der Ansprüche 1 bis 3, bei dem der verwendete Kunststoff ASA+PC mit einem Druck in dem Bereich von 50-70 bar ist.

6. Anordnung (100) für ein Spritzgießen von Kunststoffteilen mit einer Leitung (120) für eine Einspritzung eines flüssigen Kunststoffs in eine Form (110), wobei sich die Leitung an einer Verzweigungsstelle (130) in wenigstens eine erste (122) und eine zweite (123) Zweigleitung teilt, wobei die Zweigleitungen an ihren jeweiligen einen Enden erste bzw. zweite Verbindungsstellen aufweisen, an denen sie mit der Form (110) verbunden sind und von wo aus der Kunststoff in die Form in wenigstens einer ersten und einer zweiten Strömungsrichtung (128, 129) ausströmt, wobei wenigstens die erste Zweigleitung (135, 139) mit einer Einrichtung (143, 141) für eine Verzögerung der Ausströmung des Kunststoffs in die Form (110) versehen ist, wobei die Einrichtung zwischen der Verzweigungsstelle und der Verbindungsstelle angeordnet ist und mit der Hilfe der Einrichtung ein Treffpunkt (B) zwischen verschiedenen Strömungsrichtungen des Kunststoffs im Wesentlichen frei in der Form durch die Konstruktion der Einrichtung (143, 141) zur Verzögerung der Strömung des Kunststoffs in der Form wählbar ist,
**dadurch gekennzeichnet, dass** die Form (110) mit einer weiteren Leitung (210) für eine Einspritzung von Material an dem gewählten Treffpunkt (B) und, in Verbindung hiermit, mit einer Einrichtung zur Aufnahme überschüssigen Kunststoffs versehen ist.

7. Anordnung (100) nach Anspruch 6, bei der die Einrichtung (143, 141) für eine Verzögerung der Ausströmung des Kunststoffs in die Form (110) so angepasst ist, dass der Kunststoff einen gewissen Minimalströmungsdurchsatz aufrechterhalten kann, der größer als 0 ist.

8. Anordnung (100) nach einem der Ansprüche 6 oder 7, bei dem die Leitung (120) für eine Zufuhr von Kunststoff in die Form mit mehr als zwei Zweigleitungen (122-123; 132-133; 134-135; 136-137; 138-139) mit jeweiligen Verbindungsstellen zu der Form (110) versehen ist.

9. Anordnung nach einem der Ansprüche 6 bis 8, bei der wenigstens eine Zweitleitung (122, 123) mit einer Einrichtung zum Öffnen und Schließen der Zweigleitung zu vorherbestimmten Zeitpunkten versehen ist.

10. Verwendung einer Anordnung nach einem der Ansprüche 6 bis 9 mit ASA+PC-Kunststoff mit einem Strömungsdurchsatz in dem Bereich von 70 bis 90 mm/s.

11. Verwendung einer Anordnung nach einem der Ansprüche 6 bis 9 mit ASA+PC-Kunststoff mit einem Druck in dem Bereich von 50-70 bar.

## Revendications

1. Procédé de moulage par injection de pièces en matière plastique, comprenant l'injection d'une matière plastique liquide dans un moule (110) via au moins une ligne (120) qui, au niveau d'un point de ramification (130), est divisée en au moins des première (122) et une seconde (123) lignes de ramification, et où les lignes de ramification sont, au niveau de leurs premières extrémités respectives, agencées pour être reliées au moule au niveau de premier et second points de connexion, respectivement, à partir d'où la matière plastique s'écoule jusque dans le moule dans au moins des première (128) et seconde (129) directions d'écoulement, des moyens (143, 141) étant agencés au niveau de la première ligne de ramification (135, 139) étant munie pour retarder l'écoulement de la matière plastique jusque dans le moule (110), lesquels moyens sont agencés entre le point de ramification (130) et le point de connexion, et moyens à l'aide desquels un point de rencontre (B) entre les diverses directions d'écoulement de la matière plastique peut être situé essentiellement librement de manière sélective dans le moule en vertu de la conception des moyens (143, 141) pour retarder l'écoulement de la matière plastique dans le moule,
**caractérisé en ce que** le moule (110) est muni d'une ligne supplémentaire (210) pour injecter de la matière au niveau du point de rencontre sélectionné (B), et en association avec celle-ci, de moyens pour reprendre une matière plastique en excès.

2. Procédé selon la revendication 1, dans lequel la ligne (120) pour alimenter de la matière plastique vers le moule est munie de plus de deux lignes de ramification (122-123 ; 132-133 ; 134-135 ; 136-137 ; 138-139) avec des points de connexion respectifs au moule (110).

3. Procédé selon la revendication 1 ou 2, dans lequel au moins une ligne de ramification (122) est munie de moyens pour ouvrir et fermer la ligne de ramification à des instants prédéterminés.

4. Procédé selon l'une quelconque des revendications 1 à 3, dans lequel la matière plastique utilisée est ASA + PC, avec un débit d'écoulement dans la plage de 70 à 90 mm/s.

5. Procédé selon l'une quelconque des revendications 1 à 3, dans lequel la matière plastique utilisée est ASA + PC, avec une pression dans la plage de 50 à 70 bars.

6. Agencement (100) pour mouler par injection des pièces en matière plastique, comprenant une ligne (120) pour injection d'une matière plastique liquide dans un moule (110), laquelle ligne, au niveau d'un point de ramification (130), se divise en au moins des première (122) et seconde (123) lignes de ramification, lesquelles lignes de ramification ont, à leurs premières extrémités respectives, des premier et second points de connexion, respectivement, où elles sont reliées au moule (110), et à partir d'où la matière plastique s'écoule jusque dans le moule dans au moins des première et seconde directions d'écoulement (128, 129), des moyens (143, 141) étant agencés au niveau de la première ligne de ramification (135, 139) pour retarder l'écoulement de la matière plastique jusque dans le moule (110), lesquels moyens sont positionnés entre le point de ramification et le point de connexion, et moyens à l'aide desquels le point de rencontre (B) entre les diverses directions d'écoulement de la matière plastique peut être situé essentiellement librement sélectivement dans le moule en vertu de la conception de moyens pour retarder l'écoulement de la matière plastique dans le moule,
**caractérisé en ce que** le moule (110) est muni d'une ligne supplémentaire (210) pour injecter du matériau au niveau du point de rencontre sélectionné (B), et en association avec celle-ci, de moyens pour reprendre de la matière plastique en excès.

7. Agencement (100) selon la revendication 6, dans lequel les moyens (143, 141) pour retarder l'écoulement de la matière plastique jusque dans le moule (110) sont adaptés pour permettre à la matière plastique de conserver un certain débit d'écoulement minimum qui est supérieur à zéro.

8. Agencement (100) selon la revendication 6 ou 7, dans lequel la ligne (120) pour alimenter de la matière plastique vers le moule est munie de plus de deux lignes de ramification (122-123 ; 132-133 ; 134-135 ; 136-137; 138-139) avec des points de connexion respectifs au moule.

9. Agencement selon l'une quelconque des revendications 6 à 8, dans lequel au moins une ligne de ramification (122, 123) est munie de moyens pour ouvrir et fermer la ligne de ramification à des instants prédéterminés.

10. Utilisation d'un agencement selon l'une quelconque des revendications 6 à 9 avec une matière plastique ASA + PC, ayant un débit d'écoulement dans la plage de 70 à 90 mm/s.

11. Utilisation d'un agencement selon l'une quelconque des revendications 6 à 9 avec une matière plastique ASA + PC, avec une pression dans la plage de 50 à 70 bars.
